# EUROPEAN PATENT SPECIFICATION

(11) **EP 2 058 382 B1**
(45) Date of publication and mention of the grant of the patent: **11.05.2011**
(21) Application number: 07118436.0
(22) Date of filing: 15.10.2007
(51) Int. Cl.: C09K 11/59, C09K 11/64, C09K 11/65

(54) **Method of manufacturing a rare-earth doped alkaline-earth silicon nitride phosphor, rare-earth doped alkaline-earth silicon nitride phosphor obtainable by such a method and radiation-emitting device comprising such a rare-earth doped alkaline-earth silicon nitride phosphor**
Verfahren zur Herstellung eines seltenerddotiertem Erdalkali-Siliciumnitrid-Leuchtstoffes, auf diese Weise herstellbarer seltenerddotierter Erdalkali-Siliciumnitrid-Leuchtstoff und strahlungsemittierende Vorrichtung mit derartigem seltenerddotiertem Erdalkali-Siliciumnitrid-Leuchtstoff
Procédé de fabrication d'un phosphore de nitrure de silicium alcalinoterreux dopé aux terres rares, phosphore de nitrure de silicone alcalinoterreux dopé aux terres rares pouvant être obtenu selon ce procédé et dispositif émetteur de rayonnement comprenant ledit phosphore de nitrure de silicone alcalinoterreux dopé aux terres rares

(43) Date of publication of application: 13.05.2009
(73) Proprietor: Leuchtstoffwerk Breitungen GmbH, 98597 Breitungen (DE); Tridonic Jennersdorf GmbH, 8380 Jennersdorf (AT)
(72) Inventor: Hintzen, Hubertus Theresia Jozef Maria, 5646 JE, Eindhoven (NL); Duan, Cheng-Jun, NL-5612 AR, Eindhoven (NL); Delsing, Anne Charlotte Anoinette, NL-5616 HZ, Eindhoven (NL); Starick, Detlef, D-17489, Greifswald (DE); Rösler, Sylke, D-99817, Eisenach (DE); Rösler, Sven, D-99817, Eisenach (DE)
(74) Representative: Engel, Christoph Klaus

(56) References cited:
- EP-A- 1 104 799
- WO-A-2006/126567
- US-A1- 2007 114 548

## Description

### FIELD OF THE INVENTION

This invention relates to a method of manufacturing a rare-earth doped alkaline-earth silicon nitride phosphor of a stoichiometric composition, said method comprising the step of selecting one or more compounds each comprising at least one element of the group comprising the rare-earths elements, the alkaline-earth elements, silicon and nitrogen and together comprising the necessary elements to form the rare-earth doped alkaline-earth silicon nitride phosphor bringing the compounds at an elevated temperature in reaction for forming the rare-earth doped alkaline-earth silicon nitride phosphor, a small amount of oxygen, whether intentionally or not-intentionally added, being incorporated in the rare-earth doped alkaline-earth silicon nitride phosphor thus formed. Such silicon nitride based phosphors form phosphors with improved chemical composition and optical properties. Such rare-earth doped silicon nitride based materials strongly absorb UV-blue light and convert it efficiently into yellow-orange-red light, and therefore they can be used as a phosphor for light sources, especially for Light Emitting Diodes (LED). The invention further relates to a phosphor obtainable by such a method and to a radiation-emitting device comprising such a phosphor.

### BACKGROUND OF THE INVENTION

WO2006/126567 discloses a method of manufacturing a modified rare-earth doped alkaline-earth silicon oxynitride phosphor, wherein part of the alkaline-earth cations is replaced by alkali ions, the method comprising the steps of selecting the elements to form the modified rare-earth doped alkaline-earth silicon nitride phosphor, and bringing the compounds at an elevated temperature under a reducing ambient.

A method of the kind mentioned in the opening paragraph is known from the European patent application EPA 99123747 that has been published under no. EP 1 104 799 on June 6, 2001. It is described how in this way e.g. Eu²⁺-doped M₂Si₅N₈ (M = Ca, Sr, Ba) is manufactured that strongly absorbs UV-blue radiation and converts this absorbed radiation efficiently into red light.

A drawback of the above method is that the conversion efficiency of the phosphors obtained by said method is not fully satisfying and higher conversion efficiency is preferred. Moreover, the conversion efficiency drops due to degradation of the phosphor.

### OBJECT AND SUMMARY OF THE INVENTION

For that reason the present invention aims at providing a method of manufacturing such a phosphor that results in a phosphor with still higher conversion efficiency and an excellent life-time.

According to the invention that aim is reached in a method of the kind mentioned in the opening paragraphs which is characterized in that the creation of defects by formation of a non stoichiometric oxygen containing phosphor is at least partly prevented by partly substituting the alkaline earth ions of the alkaline-earth silicon nitride phosphor by alkali ions by which vacancies are created, filled or annihilated resulting in the formation of a modified alkaline-earth silicon nitride phosphor having a stoichiometric composition. In this way a modified phosphor is obtained with excellent optical luminescence properties like the spectral distribution of the converted radiation but with in particular a very high conversion efficiency and very moderate degradation behavior.

The present invention is based on the following surprising recognitions. Firstly the inventor realized that small amounts of oxygen are intentionally or un-intentionally added in the starting materials or during the manufacturing process. An example of the first is the addition of small amounts of europium oxide (Eu₂O₃) to the compounds used for forming the phosphor. Although the firing of said compounds to obtain the phosphor normally is performed under a reducing ambient of e.g. a mixture of nitrogen and hydrogen, the inventor realizes that not all the oxide thus added is removed. Moreover, unintentional addition of oxygen can occur since the pure starting materials may contain oxide impurities that are not completely or even not at all removed during the manufacturing. An example of such an impurity is silicon dioxide (SiO₂) that may be present in various amounts in a starting material like silicon nitride (Si₃N₄). A second recognition is that the presence of oxygen may lead to formation of a non-stoichiometric compound on the phosphor crystal lattice of the nitrido silicate type comprising comer-sharing SiN₄ tetraeders and having various crystal structures like the monoclinic or orthorhombic structures. This may be indicated by the following formula:

AE₂Si₅N₈₋ₓO_{3/2*x}

This equation shows that if a fraction x of the nitrogen ions is replaced by oxygen ions, the resulting compound must contain 3/2*x Oxygen atoms in order to obtain charge-neutrality. Whereas only a fraction x is available for positioning O ions on N sites the remaining 1/2*x O atoms have to be positioned elsewhere. This may be e.g. in the form of an interstitional (1/2) oxygen atom. Such a defect will influence the conversion efficiency in negative manner and also may enhance degradation of the phosphor. Creation of an anion vacancy in the phosphor crystal lattice can be used according to the invention to avoid the formation of such an interstitional oxygen defect in a manner that will be discussed below. More likely however at least a part of the superfluous oxygen atoms are positioned on an N ion position in an additional unit cell. However, for reasons of charge neutrality this defect, - that also has the above negative effects on the phosphor - is equivalent to the creation of a cation vacancy on the cation sublattice. Furthermore, the invention is based on the recognition that by substituting suitable elements of the periodic system for the ions forming the (rare-earth doped) alkaline-earth silicon nitride phosphor, said defects can be avoided by creating, filling or annihilating vacancies. Moreover, with the method of the present invention also segregation of the phosphor into two or more compounds is substantially prevented. Such segregation also is detrimental for the conversion efficiency and the degradation behavior of the phosphor. Thus, with a method according to the invention a phosphor with a very high efficiency phosphor is obtained since the number of defects such as interstitionals and vacancies that will act as centers for non-radiative recombination and the possibility of segregation is reduced in a phosphor obtainable by a method according to the invention. At the same time degradation behavior of the phosphor is improved.

In a method according to the invention the suitable further elements form cations for partial replacement of alkaline-earth cations and having a lower positive charge than the cation that they replace. In this way for the same total positive charge a larger number of cations is available and the cation vacancies can be filled by said excess cations. A part of the alkaline-earth cations ions is replaced by alkali ions. Thus a part of the Mg, Ba, Ca, and/or Sr is replaced by Na, K or Rb ions. In a modification beyond the present invention, a part of the silicon cations (Si) is replaced by III-element ions (TE), i.e. by elements of the third column of the periodic system of elements and thus by Al, Ga or In ions.

In embodiments beyond the present invention, the suitable elements form anions for replacement of nitrogen anions and having a larger negative charge than the nitrogen ions that they replace. In this way also anion vacancies are created that can annihilate the cation vacancies formed by excess oxygen on the nitrogen sublattice. Similarly, the formation of an interstitional oxygen defect will be avoided since the created anion vacancy can be occupied by an oxygen atom that otherwise could form an interstitional. An example of this creation of an anion vacancy is formed by replacing a part of the nitrogen ions (N) by carbon ions (C).

Preferably the creation of vacancies is substantially completely prevented by the incorporation of appropriate amounts of alkali ions in the phosphor. For this reason an advantageous modification is characterized in that in order to determine the suitable amount of further elements the oxygen content in the starting compounds and/or the amount of oxygen introduced during the reaction process are determined.

In a preferred modification, the amount of oxygen within the inventive phosphor can be minimized by obviating nitrates, carbonates, oxalates, acetates, or the like as starting materials. Only residual oxygen present e.g., in technically available nitrides will be present in the resulting phosphor.

In a further modification for the compounds solid compound are chosen that are grinded and mixed and heated in a furnace under an ambient that is free or at least substantially free of oxygen. Apart from (substantially) oxygen free, such an ambient may be even reducing such as an ambient comprising a mixture of nitrogen and hydrogen. Although other manufacturing methods, like using the MOVPE or MOVPE (= Metal Organic Vapor Phase Epitaxy/Deposition) or the so-called Sol-Gel technique, the method of this solid-state synthesis embodiment implies several important advantages. The heating may be done e.g. in the temperature range of 1200 to 1400 degrees Celsius and preferably between 1300 and 1400 degrees Celsius for the above solid state synthesis method.

In a preferred modification for the compounds used in forming the phosphor only compounds are selected that do not contain intentionally added oxygen. In this way the oxygen compound in the modified phosphor is as low as possible. The modified phosphor compound in this case has a formula that is as close as possible to e.g. AE₂Si₅N₈.

The invention further comprises a modified rare-earth doped alkaline-earth silicon nitride phosphor obtainable by a method according to the invention. The composition of the phosphor is as AE₂₋ₓAKₓSi₅N₈₋ₓOₓ:RE, wherein AE is an alkaline-earth element, wherein AK is an alkali element, wherein RE is a rare earth element, and wherein x is smaller than 1, preferably substantially smaller than 1, although larger than zero. Very suitable values for the oxygen mol fraction x are smaller than 0.25 and a most preferred range for the oxygen content lies between 0 and 0.1. Another attractive phosphor beyond the present invention obeys AE₂Si₅₋ₓN₈₋ₓTEₓOₓ:RE, wherein x is preferably smaller than 1 and preferably smaller than 0.25 and more preferably between 0 and 0.1. A further composition beyond the present invention obeys AE₂Si₅N₈₋₂ₓCₓOₓ:RE, wherein again x is smaller than 1, more preferably smaller than 0.25 and more preferably between 0 and 0.1. The symbols AE, AK, RE and TE have the same meaning as indicated before. It is to be noted that also phosphors can be obtained that form a mixture of the above mixed crystals. Thus substitution may simultaneously occur at both the AE sublattice as on the silicon lattice as on the nitrogen sublattice.

Finally the invention comprises a radiation-emitting device containing a modified rare-earth doped alkaline-earth silicon nitride phosphor obtainable with a method according to the invention.

It is noted here that the notation chosen to represent the rare-earth doping, i.e. "formula:RE", is chosen for reasons of simplicity and for expressing that the RE element forms a doping element and may be present in a relatively small quantity. However, in the present invention also oxygen and the suitable substitution elements are present in relatively low concentrations in the mixed crystal of the phosphor compound. Thus, also a representation by "formula" in which the RE element is represented and handled in the same manner as the other constituents (AE, Si, N, O) of the phosphor compound is feasible. In fact the RE element may be present also in high quantity relative to the AE element up to even a 100 percent replacement of the AE element by the RE element.

### DESCRIPTION OF EMBODIMENTS

It is further to be noted that silicon nitride based materials can be prepared in different ways, e.g. solid state synthesis starting from the nitrides, nitridation of elemental starting materials or carbothermal reduction and nitridation of oxide starting materials. Ammonolysis of oxide based starting materials, comprising the heating in NH₃ containing atmosphere, is also a possible route. The solid-state synthesis method is normally used to prepare the M₂Si₅N₈:Eu phosphor material starting from (nitrided) Eu and M (alkaline earth) metals together with Si₃N₄.

For example, the preparation of Eu²⁺ doped M₂Si₅N₈ (M=Ba, Sr, Ca) can be as follows. The binary nitride precursors SrNₓ (x0≈.6-0.66), BaNₓ (x≈0.6-0.66) and EuNₓ (x ≈ 0.94) can be pre-prepared by the reaction of the pure strontium metal (Aldrich, 99.9%, pieces), barium metal (Aldrich, 99.9%, pieces) and Eu metal (Csre, 99.9%, lumps) under flowing dried nitrogen at 800, 550, and 800 °C, respectively, for 8-16 hours in horizontal tube furnaces. In addition, calcium nitride powder Ca₃N₂ (Alfa, 98%) and α-Si₃N₄ powder (Permascand, P95H, α content 93.2%;) can be used as the as-received raw materials. Polycrystalline M₂₋xEuₓSi₅N₈ (0≤x≤0.2 for M = Ca, 0≤x≤2.0 for M = Sr, Ba) powders can be prepared by a solid state reaction method at moderately high temperature. The Ca₃N₂, SrNₓ, BaNₓ and EuNₓ as well as α-Si₃N₄ powders are weighed out in the appropriate amounts and subsequently mixed and ground together in an agate mortar. The powder mixtures are then transferred into e.g. molybdenum crucibles. All processes were carried out in a purified-nitrogen-filled glove-box. Subsequently those powder mixtures are fired twice (with a medium grinding in between) in a horizontal tube furnace at 1300 - 1400 °C for 12 and 16 hours, respectively, under flowing 90% N₂-10% H₂ atmosphere.

A phosphor beyond the invention, obtainable by a method of manufacturing beyond the present invention, of high efficiency is given by the formula (Sr,Eu)₂Si_{5-y}Al_{y}N_{8-y}O_{y}. In order to prevent formation of defects which may be detrimental for the luminescence behavior, each unit cell contains a compound (formula unit) with composition (Sr+Eu)₂(Si+Al)₅(N+O)₈. The ideal relation between (Sr+Eu), (Si+Al), and (N+O) is 2:5:8 because there are present two sites for large metal ions (Sr,Eu), five cation sites for tetrahedrally coordinated ions (Si,Al) and eight anion sites (N,O) per formula unit. Other deviating compositions in unit cells like Sr₂Si₅N₍₈₋ₓ₎O_{(3/2x)} are avoided by taking residual oxygen into account. The phosphor (Sr,Eu)₂Si_{5-y}Al_{y}N_{8-y}O_{y} shows oxygen preferably in a very small amount i.e., 0 < y < 1 and more preferably it holds that 0 < y < 0.1. The preparation of such a phosphor can be achieved e.g., by adding aluminum nitride in the same molar amounts as oxygen present in Si₃N₄, the fact that oxygen is present on the nitrogen site can be balanced by the presence of aluminum on the silicon site. Most unit cells contain Sr₂Si₅N₈ units, while only some of them contain Sr₂Si₄AlN₇O units.

A description is given for the solid-state synthesis route of silicon nitride based materials starting with Si₃N₄ as starting material. Different options to compensate the oxygen present in the starting material Si₃N₄ (that means that actually SiO₂ is present) for e.g. Sr₂Si₅N₈:Eu are:
1. Beyond the present invention, with Al³⁺ (e.g. by the addition of AlN)
   Due to the replacement of a (SiN)⁺ pair by an equally charged (AlO)⁺ pair, the overall stoichiometry of the host-lattice is maintained, and no defects like vacancies are formed. This can be achieved by adding AlN to the reaction mixture in the amount required to consume the oxygen present in the starting Si₃N₄ material (as SiO₂) according to the reaction equation: SiO₂ + 2 AlN 〉̶ SiAl₂N₂O₂, resulting in a compound with the same stoichiometry as the "ideal" Si₃N₄ material (without oxygen). Note that the residual oxygen content in the practically available aluminum nitride has to be taken into account, too. An example of the resulting phosphor is (Sr,Eu)₂Si₅₋ₓAlₓN₈₋ₓOₓ,
2. Beyond the present invention, with C⁴⁻ (e.g. by the addition of SiC)
   Due to the replacement of a (OC)⁶⁻ pair by an equally charged (N₂)⁶⁻ pair, the overall stoichiometry of the host-lattice is maintained, and no defects (like vacancies or interstitials) are formed. This can be achieved by adding SiC to the reaction mixture in the amount required to consume the oxygen present in the starting Si₃N₄ material (as SiO₂) according to the reaction equation: SiO₂ + 2 SiC 〉̶ Si₃C₂O₂, resulting in a compound with the same stoichiometry as the "ideal" Si₃N₄ material (without oxygen). An example of the resulting phosphor is (Sr,Eu)₂S1₅N₈₋₂ₓOₓCₓ.
3. According to the present invention, with Na⁺ (e.g. by the addition of Na₂O in the form of Na₂CO₃ of which carbondioxide is released during synthesis). Due to the replacement of a (AEN)⁻ pair by an equally charged (NaO)⁻ pair, the overall stoichiometry of the host-lattice is maintained, and no defects (like vacancies or interstitials) are formed. This can be achieved by adding Na₂O (Na₂CO₃) to the reaction mixture (together with AlN/Al₂O₃) in the amount required to consume the oxygen present in the starting Si₃N₄ material (as SiO₂) according to the reaction equation: SiO₂ + 2 Na₂O + 3 AlN + 3 Al₂O₃ → 2 Na₂Si_{0.5}Al_{4.5}N_{1.5}O_{6.5}, resulting in a compound with the same stoichiometry as the "ideal" Sr₂Si₅N₈ material (without oxygen). An example of the resulting phosphor is (Sr,Eu)₂₋ₓ NaₓS1₅N₈₋ₓOₓ

The proposed idea not only can be used for the compensation of oxygen present in Si₃N₄, but also in the starting materials containing Sr and Eu. The proposed idea makes it possible to use relatively small quantities of (cheaper and more convenient) oxide starting materials, like SrO (SrCO₃) and Eu₂O₃.

Specific examples for Sr_{0.9}Eu_{0.1}Si_{5-y}Al_{y}N_{(8-y)}O_{y}. Starting materials are Si₃N₄ (either α or β), SrNₓ (or nitrided Sr) and/or small quantities of SrO (or SrCO₃) and EuN_{y} (or nitrided Eu) and/or small quantities of Eu₂O₃, while AlN is added for charge compensating the residual amounts of oxygen (e.g. present in Si₃N₄) or the intentionally added amounts of oxygen (e.g. as SrO or Eu₂O₃).

The synthesis conditions regarding to mixing procedure, firing temperature and atmosphere are similar to those described in van Krevel, J. W. H.; "On new rare-earth doped M-Si-Al-O-N materials: luminescence properties and oxidation resistance", PhD thesis, TU Eindhoven, 2000, ISBN 90-386-2711-4; and in Li, Y. Q.; "Structures and luminescence properties of novel rare-earth doped silicon nitride based materials", PhD thesis, TU Eindhoven, 2005, ISBN 90-386-2677-0; in the case of Sr₂Si₅N₈:Eu.

These and further properties, aspects, and advantages will be discussed in more detail below with reference to two embodiments beyond the invention Examples: (oxygen content increasing in the sequence 1 < 2):
Example 1: a Mixture of 231 g β-Si₃N₄ (Cerac, oxygen content 0.6 wt%), 3.57 g AlN, 6.08 g Eu (which is nitrided in N₂ atmosphere at 800 °C) and 172 g Sr (which is nitrided in N₂ atmosphere at 800 °C). Reaction in N₂/H₂ atmosphere at 1350-1400 °C. The resulting phosphor can be represented by the following formula:

   Sr_{2-y} EuySi₅₋ₓAlₓN₈₋ₓOₓ

   wherein x = 0.087 and y = 0.04.
Example 2: a mixture of 229 g α-Si₃N₄ (Permascand, oxygen content 1.5 wt. %), 8.73 g AlN, 6.08 g Eu (which is again nitrided in N₂ atmosphere at 800 °C) and 172 g Sr (which is also again nitrided in N₂ atmosphere at 800 °C). Reaction in N₂/H₂ atmosphere at 1350-1400 °C. The resulting phosphor can be represented by the following formula:

   Sr_{2-y} EuySi₅₋ₓXAlₓN₈₋ₓOₓ

   wherein x = 0.213 and y = 0.04.

Although the invention is particularly suitable for a phosphor made by grinding and heating, it can be also applied in other manufacturing methods such as those mentioned above like MOVPE. In the method use can be made of fluxes or additives for influencing particle size and/or particle morphology.

Instead of doping with a single rare-earth ion, doping with more than one of such ions, e.g. Eu and Ce, may be considered. Also co-doping or co-activation with transition metal ions is feasible.

Further it is to be noted that in the examples Sr can be partly or completely be replaced by Mg or Ca or Ba or the like or by a combination of such elements. In this respect it is to be noted that the alkaline-earth elements may be partly replaced by other suitable metallic ions with a 2+ charge like in particular Zn-ion.

Although the invention in particular aims at the manufacture of a modified alkaline-earth silicon nitride phosphor with a composition close to AE₂Si₅N₈ it may equally well be applied to the preparation of other modified alkaline-earth silicon nitride phosphor compounds with a composition close to other known compounds of the elements AE, Si and N. Examples of the latter are AESi₇N₁₀ or AESiN₂. The invention equally deals with the corresponding obtainable phosphor compounds in which suitable substitutions are performed and with a radiation-emitting device comprising the latter.

Other excitation methods may be used than the one mentioned, e.g. Cathode-ray or X-ray excitation, electro-luminescence et. Other forms than powders may be used for the compound used in the method according the invention e.g. monocrystals, thin films, ceramics (a sintered powder), and co-coating in which the compound is formed on a nucleus of another material or in which the compound is coated by another material.

Finally it is also to be noted that although the method according to the invention preferably implies the formation of the desired phosphor compound using a synthesis based on two or more compounds, it also comprises the method in which one compound that has been already made according to the composition of a desired phosphor is treated with a (or several) further compound in order to remove defects and/or segregation in the phosphor by forming a modified compound in which defects are removed by creating, filling or annihilating vacancies.

## Claims

1. A method of manufacturing a rare-earth doped alkaline-earth silicon nitride phosphor, said method comprising the steps of:
- selecting one or more compounds each comprising at least one element of the group comprising the rare-earths elements, the alkaline-earth elements, silicon and nitrogen and together comprising the necessary elements to form the rare-earth doped alkaline-earth silicon nitride phosphor;
- bringing the compounds at an elevated temperature in reaction for forming the rare-earth doped alkaline-earth silicon nitride phosphor, whereby an amount of oxygen is being incorporated in the rare-earth doped alkaline-earth silicon nitride phosphor thus formed,
**characterized in that**
- partly substituting the alkaline earth cations of the alkaline-earth silicon nitride phosphor by alkali ions by which vacancies are created, filled or annihilated within the lattice of the phosphor resulting in the formation of a modified alkaline-earth silicon nitride phosphor having a stoichiometric composition as to at least partly prevent the creation of defects by formation of a non stoichiometric oxygen containing alkaline-earth silicon nitride phosphor, wherein the resulting rare-earth doped alkaline-earth silicon nitride phosphor is **characterized by** a general formula of
AE₂₋ₓAKₓSi₅N₈₋ₓOₓ:RE
wherein AE is an alkaline-earth element;
AK is an alkali element; and
RE is a rare earth element;
and wherein x is smaller than 1.

2. Method according to claim 1, **characterized in that** the creation of defects is substantially completely prevented by the incorporation of suitable amounts of alkali ions in the phosphor.

3. Method according to claim 2, **characterized in that** in order to determine the suitable amount of alkali ions the oxygen content in the starting compounds and/or the amount of oxygen introduced during the reaction process are determined.

4. Method according to anyone of the preceding claims, **characterized in that** for the compounds solid compounds are chosen that are grinded and mixed and heated in a furnace under a reducing ambient.

5. A modified rare-earth doped alkaline-earth silicon nitride phosphor obtainable by a method according to any of the preceding claims.

6. A modified rare-earth doped alkaline-earth silicon nitride phosphor as claimed in claim 5, **characterized in that** x is smaller than 0.25 and more preferably smaller than 0.1.

7. A radiation emitting device comprising a modified rare-earth doped alkaline-earth silicon nitride phosphor as claimed in claims 5 or 6.

## Patentansprüche

1. Verfahren zur Herstellung eines seltenerddotierten Erdalkalisiliciumnitrid-Leuchtstoffs, wobei das Verfahren folgende Schritte umfasst:
- Auswählen einer oder mehrerer Verbindungen, welche jeweils mindestens ein Element aus der die Seltenerdelemente, die Erdalkalielemente, Silicium und Stickstoff umfassenden Gruppe umfassen, und welche zusammen die erforderlichen Elemente umfassen, um den seltenerddotierten Erdalkalisiliciumnitrid-Leuchtstoff zu bilden;
- Zur-Reaktion-Bringen der Verbindungen bei einer erhöhten Temperatur, um den seltenerddotierten Erdalkalisiliciumnitrid-Leuchtstoff zu bilden, wobei in den so gebildete seltenerddotierten Erdalkalisiliciumnitrid-Leuchtstoff eine Menge an Sauerstoff eingebaut wird,
**dadurch gekennzeichnet, dass**
- partielles Ersetzen der Erdalkalimetall-Kationen des Erdalkalisiliciumnitrid-Leuchtstoffs durch Alkalimetallionen, wodurch innerhalb des Leuchtstoffgitters Fehlstellen erzeugt, gefüllt oder beseitigt werden, was zu der Bildung eines modifizierten Erdalkalisiliciumnitrid-Leuchtstoffs führt, der eine stöchiometrische Zusammensetzung aufweist, um die Erzeugung von Defekten durch Bildung eines nicht stöchiometrischen sauerstoffhaltigen Erdalkalisiliciumnitrid-Leuchtstoffs zumindest teilweise zu verhindern, wobei der resultierende seltenerddotierte Erdalkalisiliciumnitrid-Leuchtstoff durch die folgende allgemeine Formel **gekennzeichnet** ist:
AE₂₋ₓAKₓSi₅N₈₋ₓOₓ: RE,
wobei
- AE für ein Erdalkalielement steht;
- AK für ein Alkalielement steht;
- RE für ein Seltenerdelement steht;
und wobei x kleiner als 1 ist.

2. Verfahren nach Anspruch 1, **dadurch gekennzeichnet, dass** die Erzeugung von Defekten durch den Einbau geeigneter Mengen von Alkalimetallionen in den Leuchtstoff weitgehend vollständig verhindert wird.

3. Verfahren nach Anspruch 2, **dadurch gekennzeichnet, dass** der Sauerstoffgehalt in den Ausgangsverbindungen und/oder die Menge des während des Reaktionsprozesses eingeführten Sauerstoffs ermittelt wird, um die geeignete Menge an Alkalimetallionen zu ermitteln:

4. Verfahren nach einem der vorhergehenden Ansprüche,
**dadurch gekennzeichnet, dass** die Verbindungen als feste Verbindungen ausgewählt werden, welche zerkleinert und vermischt und in einer reduzierenden Umgebung in einem Ofen erwärmt werden.

5. Modifizierter seltenerddotierter Erdalkalisiliciumnitrid-Leuchtstoff, welcher durch ein Verfahren nach einem der vorhergehenden Ansprüche zu erhalten ist.

6. Modifizierter seltenerddotierter Erdalkalisiliciumnitrid-Leuchtstoff nach Anspruch 5, **dadurch gekennzeichnet, dass** x kleiner als 0,25; vorzugsweise kleiner als 0,1 ist.

7. Strahlungsemittierende Vorrichtung, welche einen modifizierten seltenerddotierten Erdalkalisiliciumnitrid-Leuchtstoff nach Anspruch 5 oder 6 umfasst.

## Revendications

1. Procédé de fabrication d'un phosphore de nitrure de silicium alcalino-terreux dopé aux terres rares, ledit procédé comprenant les étapes consistant à :
- choisir un ou plusieurs composés comprenant chacun au moins un élément du groupe comprenant les éléments de terres rares, les éléments alcalino-terreux, le silicium et l'azote et comprenant ensemble les éléments nécessaires à la formation de phosphore de nitrure de silicium alcalino-terreux dopé aux terres rares ;
- porter les composés à une température élevée dans une réaction de formation de phosphore de nitrure de silicium alcalino-terreux dopé aux terres rares, une quantité d'oxygène étant ainsi incorporée dans le phosphore de nitrure de silicium alcalino-terreux dopé aux terres rares ainsi formé,
**caractérisé en ce que**
- le remplacement partiel des cations alcalino-terreux du phosphore de nitrure de silicium alcalino-terreux par des ions alcalins entraîne la création, le remplissage ou l'annihilation de trous dans la matrice du phosphore résultant en la formation d'un phosphore de nitrure de silicium alcalino-terreux modifié ayant une composition stoechiométrique de manière à au moins partiellement prévenir la création de défauts par formation d'un phosphore de nitrure de silicium alcalino-terreux contenant de l'oxygène non stoechiométrique, le phosphore de nitrure de silicium alcalino-terreux dopé aux terres rares obtenu étant **caractérisé par** une formule générale :
AE₂₋ₓAKₓSisN₅₋ₓOₓ:RE
dans laquelle
- AE est un élément alcalino-terreux ;
- AK est un élément alcalin ; et
- RE est un élément de terres rares ;
- et dans laquelle x est inférieur à 1.

2. Procédé selon la revendication 1, **caractérisé en ce que** la création de défauts est sensiblement totalement empêchée par l'incorporation de quantités adaptées d'ions alcalins dans le phosphore.

3. Procédé selon la revendication 2, **caractérisé en ce que** de manière à déterminer la quantité adaptée d'ions alcalins, la teneur en oxygène dans les composés de départ et/ou la quantité d'oxygène introduite durant le procédé de réaction sont déterminées.

4. Procédé selon l'une quelconque des revendications précédentes, **caractérisé en ce que** pour les composés, des composés solides sont choisis qui sont broyés puis mélangés et chauffés dans un fourneau sous une atmosphère réductrice.

5. Phosphore de nitrure de silicium alcalino-terreux dopé aux terres rares modifié pouvant être obtenu par un procédé selon l'une quelconque des revendications précédentes.

6. Phosphore de nitrure de silicium alcalino-terreux dopé aux terres rares modifié selon la revendication 5, **caractérisé en ce que** x est inférieur à 0,25 et de préférence inférieur à 0,1.

7. Dispositif émetteur de rayonnement qui comprend un phosphore de nitrure de silicium alcalino-terreux dopé aux terres rares modifié selon les revendications 5 ou 6.
